# EUROPEAN PATENT APPLICATION

(11) **EP 3 330 412 A1**
(43) Date of publication of application: **06.06.2018**
(21) Application number: 16830567.0
(22) Date of filing: 27.07.2016
(51) Int. Cl.: C25F 3/14, C22C 21/00, C25D 11/04, C25F 3/04, H01G 11/70, H01M 4/72

(54) **ALUMINUM PLATE AND METHOD FOR PRODUCING ALUMINUM PLATE**

(30) Priority: 30.07.2015 JP 2015150312; 26.04.2016 JP 2016087974
(71) Applicant: Fujifilm Corporation, Minato-ku Tokyo 106-8620 (JP)
(72) Inventor: KOZAWA Yusuke, Shizuoka 421-0396 (JP); KAWAGUCHI Junji, Shizuoka 421-0396 (JP); MATSUURA Atsushi, Shizuoka 421-0396 (JP)
(74) Representative: Hoffmann Eitle
(86) International application number: PCT/JP2016/072070
(87) International publication number: WO 2017/018462

(57) **Abstract**

An object is to provide an aluminum plate which has favorable adhesiveness and coating properties to active materials and has a high strength and a method for manufacturing an aluminum plate. An average opening diameter of the plurality of through holes is 0.1 µm or more and 100 µm or less, an average opening ratio of the plurality of through holes is 2% or more and 40% or less, among the plurality of through holes, a percentage of through holes having an opening diameter of 5 µm or less is 40% or less, among the plurality of through holes, a percentage of through holes having an opening diameter of 40 µm or more is 40% or less, and, among the plurality of through holes, a percentage of through holes in which a ratio S₁/S₀ of an area S₁ of the through holes to an area S₀ of a circle having a long axis of the through hole as a diameter is 0.1 or more and 1 or less is 50% or more.

## Description

### BACKGROUND OF THE INVENTION

### 1. Field of the Invention

The present invention relates to an aluminum plate that is used as collectors for storage devices and a method for manufacturing an aluminum plate.

### 2. Description of the Related Art

In recent years, in response to the development of portable devices such as personal computers and mobile phones, hybrid vehicles, electric vehicles, and the like, the demand for storage devices, particularly, lithium ion capacitors, lithium ion secondary batteries, and electric double layer capacitors as power supplies has been intensifying.

It is known that, as electrode collectors that are used for positive electrodes or negative electrodes in the above-described storage devices (hereinafter, simply referred to as "the collectors"), aluminum plates are used. In addition, it is known that an active material such as activated charcoal is applied onto the surface of a collector made of this aluminum plate and is used as electrodes such as positive electrodes or negative electrodes.

For example, JP2013-077734A describes the use of metal foils having a plurality of through holes as collectors, describes aluminum, copper, and the like as materials therefor, and describes an electrode having an active material layer(s) on either or both surfaces of this metal foil ([Claim 1] and [0021]).

In addition, WO2011/004777A describes the use of an aluminum perforated foil as a collector and describes the application of an active material onto this aluminum perforated foil ([Claim 1] and [0036]).

In addition, WO2001/091212A describes the use of a net-like porous body as a core for porous electrodes and describes the loading of an active material into a core ([Abstract] and [Disclosure of the Invention]).

In storage devices in which the above-described collectors are used, as the internal resistance of the devices decreases, more favorable output characteristics are exhibited; however, in a case in which the collectors and active materials are peeled off due to the long-term use or the like, the contact resistance increases, and the output characteristics as storage devices deteriorate. Therefore, the adhesiveness between collectors and active materials is desirably high.

Here, as described in WO2001/091212A, as a method for forming through holes, forming methods by means of mechanical working such as punching are known. However, through holes formed by means of punching are large holes having a diameter of 300 µm or more. When the diameters of through holes are large, protrusions and recesses corresponding to the through holes in the collector are generated on the surface of the applied active material or the active material bleeds through the through holes, and thus the uniformity of the active material surface is impaired, and the coating properties degrade.

Therefore, the formation of fine through holes has been proposed.

For example, WO2011/004777A describes that, in a case in which the inner diameters of the through holes are set in a range of 0.2 to 5 µm, the bleed-through of the applied active materials is prevented ("0032" and "0036").

### SUMMARY OF THE INVENTION

Here, according to the present inventors' studies, it was found that, in a case in which the diameters of through holes are too small, the applied active materials do not easily intrude into through holes, and thus sufficient adhesiveness cannot be ensured.

There is a possibility that both the adhesiveness and coating properties of collectors and active materials can be satisfied by appropriately controlling the diameters of through holes and increasing the opening ratios. However, in a case in which, as the opening ratio increases, the strength of the collector decreases, and thus there is a concern that the collector may rupture due to tension or the like applied during manufacturing, and the handling properties or the productivity becomes poor.

Therefore, an object of the present invention is to provide an aluminum plate which has favorable adhesiveness and coating properties to active materials and has a high strength and a method for manufacturing an aluminum plate.

The present inventors carried out intensive studies in order to achieve the above-described object, consequently found that, in a case in which an aluminum plate in which the average opening diameter of a plurality of through holes is 0.1 µm or more and 100 µm or less, the average opening ratio of the plurality of through holes is 2% or more and 40% or less, among the plurality of through holes, the percentage of through holes having an opening diameter of 5 µm or less is 40% or less, among the plurality of through holes, the percentage of through holes having an opening diameter of 40 µm or more is 40% or less, and, among the plurality of through holes, the percentage of through holes in which the ratio S₁/S₀ of the area S₁ of the through holes to the area S₀ of a circle having the long axis of the through hole as the diameter is 0.1 or more and 1 or less is 50% or more is provided, the above-described object can be achieved, and completed the present invention.

That is, it was found that the above-described object can be achieved by means of the following constitutions.

(1) An aluminum plate having a plurality of through holes that penetrates the aluminum plate in a thickness direction, in which an average opening diameter of the plurality of through holes is 0.1 µm or more and 100 µm or less, an average opening ratio of the plurality of through holes is 2% or more and 40% or less, among the plurality of through holes, a percentage of through holes having an opening diameter of 5 µm or less is 40% or less, among the plurality of through holes, a percentage of through holes having an opening diameter of 40 µm or more is 40% or less, and, among the plurality of through holes, a percentage of through holes in which a ratio S₁/S₀ of an area S₁ of the through holes to an area S₀ of a circle having a long axis of the through hole as a diameter is 0.1 or more and 1 or less is 50% or more.
(2) The aluminum plate according to (1), in which, among the plurality of through holes, the percentage of the through holes in which the ratio S₁/S₀ of the area S₁ of the through holes to the area S₀ of the circle having the long axis of the through hole as the diameter is 0.1 or more and 1 or less is 70% or more.
(3) The aluminum plate according to (1) or (2), in which, among the plurality of through holes, the percentage of the through holes having an opening diameter of 5 µm or less is 30% or less.
(4) The aluminum plate according to any one of (1) to (3), in which, among the plurality of through holes, the percentage of through holes having an opening diameter of 40 µm or more is 30% or less.
(5) The aluminum plate according to any one of (1) to (4), in which the average opening diameter of the plurality of through holes is 0.1 µm or more and 50 µm or less.
(6) The aluminum plate according to any one of (1) to (5), in which, among the plurality of through holes, a percentage of through holes having an opening diameter of 30 µm or more is 30% or less.
(7) The aluminum plate according to any one of (1) to (6), in which a thickness is 5 to 1,000 µm.
(8) The aluminum plate according to any one of (1) to (7), in which the average opening ratio of the plurality of through holes is 30% or less.
(9) The aluminum plate according to any one of (1) to (8), in which a maximum value of an inter-hole distance between adjacent through holes is 300 µm or less.
(10) A method for manufacturing an aluminum plate having a plurality of through holes in a thickness direction, comprising: a coating-forming step of forming a coating including an aluminum hydroxide or an aluminum oxide as a main component on a surface of an aluminum substrate; a through hole-forming step of forming through holes by carrying out an electrolytic dissolution treatment after the coating-forming step; and a coating-removing step of removing the coating after the through hole-forming step, in which the coating-forming step is a step of forming the coating by carrying out an electrochemical treatment using an acid, a current density in the electrochemical treatment is 3 A/dm² to 60 A/dm², and a thickness of the coating being formed is 0.05 µm or more and 100 µm or less.
(11) The method for manufacturing an aluminum plate according to (10), in which the coating is a coating including an aluminum hydroxide as a main component.
(12) The method for manufacturing an aluminum plate according to (10) or (11), in which, in the coating-forming step, the coating is formed by carrying out the electrochemical treatment using nitric acid, hydrochloric acid, sulfuric acid, phosphoric acid, oxalic acid, or a mixed acid of two or more thereof.

According to the present invention, it is possible to provide an aluminum plate which has favorable adhesiveness and coating properties to active materials and has a high strength and a method for manufacturing an aluminum plate.

### BRIEF DESCRIPTION OF THE DRAWINGS

Fig. 1A is a top view schematically illustrating an example of an aluminum plate of the present invention.
Fig. 1B is a cross-sectional view in a direction of a B-B line in Fig. 1A.
Fig. 1C is a schematic cross-sectional view illustrating an electrode in which Fig. 1A is used as a collector.
Fig. 2 is a schematic top view illustrating a through hole in an enlarged manner.
Fig. 3 is a schematic cross-sectional view illustrating another example of the aluminum plate of the present invention.
Fig. 4A is a schematic cross-sectional view of an aluminum substrate.
Fig. 4B is a schematic cross-sectional view illustrating a state in which an oxidized film-forming treatment is carried out on the aluminum substrate so as to form an oxidized film.
Fig. 4C is a schematic cross-sectional view illustrating a state in which an electrochemical dissolution treatment is carried out after the oxidized film-forming treatment so as to form through holes in the aluminum substrate and the oxidized film.
Fig. 4D is a schematic cross-sectional view illustrating a state after the oxidized film is removed following the electrochemical dissolution treatment.
Fig. 4E is a schematic cross-sectional view illustrating a state after an electrochemical roughening treatment is further carried out following the removal of the oxidized film.
Fig. 5A is a schematic cross-sectional view of an aluminum substrate.
Fig. 5B is a schematic cross-sectional view illustrating a state in which the oxidized film-forming treatment is carried out on the aluminum substrate so as to form oxidized films on a front surface and a rear surface.
Fig. 5C is a schematic cross-sectional view illustrating a state in which the electrochemical dissolution treatment is carried out after the oxidized film-forming treatment so as to form through holes in the aluminum substrate and the oxidized films.
Fig. 5D is a schematic cross-sectional view illustrating a state after the oxidized films are removed following the electrochemical dissolution treatment.
Fig. 5E is a schematic cross-sectional view illustrating a state after the electrochemical roughening treatment is further carried out following the removal of the oxidized films.

### DESCRIPTION OF THE PREFERRED EMBODIMENTS

Hereinafter, the present invention will be described in detail.

In the following description, there are cases in which constitutional requirements will be described on the basis of typical embodiments of the present invention, but the present invention is not limited to the above-described embodiments.

Meanwhile, in the present specification, numeric ranges expressed using "to" include numeric values before and after "to" as the lower limit value and the upper limit value.

### [Aluminum plate]

An aluminum plate of the present invention is an aluminum plate having a plurality of through holes in the thickness direction, in which the average opening diameter of the plurality of through holes is 0.1 µm or more and 100 µm or less, the average opening ratio of the plurality of through holes is 2% or more and 40% or less, among the plurality of through holes, the percentage of through holes having an opening diameter of 5 µm or less is 40% or less, among the plurality of through holes, the percentage of through holes having an opening diameter of 40 µm or more is 40% or less, and, among the plurality of through holes, the percentage of through holes in which the ratio S₁/S₀ of the area S₁ of the through holes to the area S₀ of a circle having a long axis of the through hole as the diameter is 0.1 or more and 1 or less is 50% or more.

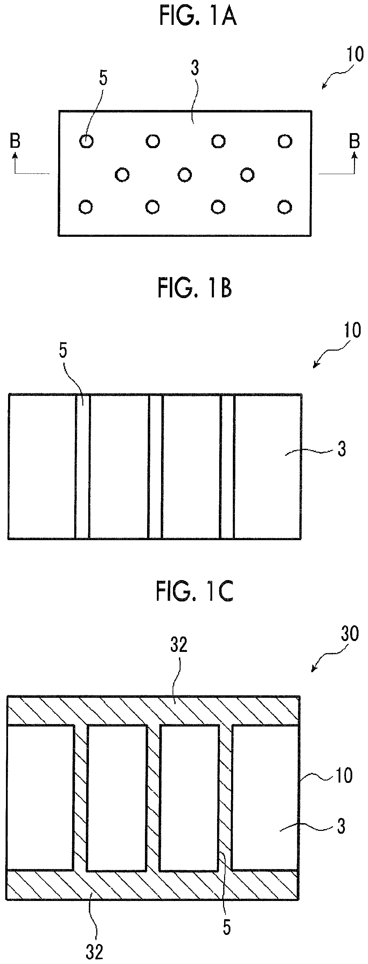

The constitution of the aluminum plate of the present invention will be described using Figs. 1A to 1C.

Fig. 1A is a schematic top view illustrating an example of a preferred embodiment of the aluminum plate of the present invention, Fig. 1B is a cross-sectional view in a direction of the B-B line in Fig. 1A, and Fig. 1C is a schematic cross-sectional view illustrating an example of an electrode in which an aluminum plate 10 illustrated in Fig. 1A is used as a collector for storage devices.

As illustrated in Figs. 1A and IB, the aluminum plate 10 is obtained by forming a plurality of through holes 5 that penetrates the aluminum plate in the thickness direction on an aluminum substrate 3.

In addition, an electrode 30 illustrated in Fig. 1C is obtained by laminating active material layers 32 on both main surfaces of the aluminum plate 10 illustrated in Fig. 1B. As illustrated in the drawings, the active material layer 32 is also loaded into the through holes 5 and is integrated with the active material layers 32 formed on both surfaces.

Regarding the plurality of through holes 5 that are formed in the aluminum substrate 3, the average opening diameter is 0.1 µm or more and 100 µm or less, the average opening ratio is 2% or more and 40% or less, the percentage of through holes having an opening diameter of 5 µm or less is 40% or less, the percentage of through holes having an opening diameter of 40 µm or more is 40% or less, and, the percentage of through holes in which the ratio S₁/S₀ of the area S₁ of the through holes to the area S₀ of a circle having a long axis of the through hole as the diameter is 0.1 or more and 1 or less is 50% or more.

In a case in which the opening diameters of the through holes are decreased, it is possible to prevent, at the time of applying active materials, the generation of protrusions and recesses corresponding to the through holes on the surface of the applied active material and the dropping and bleeding-through of the active materials, the uniformity of active material surfaces improves, and the coating properties can be improved. On the other hand, in a case in which the opening diameters of the through holes are increased, the applied active materials easily intrude into the through holes, and thus sufficient adhesiveness can be ensured.

Therefore, from the viewpoint of the coating properties of active materials, the adhesiveness to active materials, the tensile strength, and the like, the average opening diameter of the through holes is 0.1 µm or more and 100 µm or less, preferably 0.1 µm or more and 70 µm or less, more preferably 0.1 µm or more and 50 µm or less, still more preferably 5 µm or more and 50 µm or less, and particularly preferably 10 µm or more and 50 µm or less.

Meanwhile, the average opening diameter of the through holes is obtained by capturing an image of the surface of the aluminum plate using a high-resolution scanning electron microscope (SEM) at magnifications changed in a range of 100 to 10,000 times so as to capture the entire circumstances of the through holes from one surface of the aluminum plate, extracting at least 20 through holes having a circumference that continues in a ring shape from the obtained SEM image, scanning the opening diameters, and computing the average value thereof as the average opening diameter.

Meanwhile, the maximum value of the distance between the end portions of the through hole portion is measured as the opening diameter. That is, since the shape of the opening portion of the through hole is not limited to a substantial circle shape, in a case in which the shape of the opening portion is not a circle shape, the maximum value of the distances between the end portions of the through hole portion is considered as the opening diameter. Therefore, for example, in the case of a through hole having a shape in which two or more through holes are integrated together, this through hole is considered as a single through hole, and the maximum value of the distances between the end portions of the through hole portion is considered as the opening diameter.

In addition, as the percentage of through holes having an opening diameter of 5 µm or less decreases, it becomes easier for the applied active materials to intrude into the through holes 5, and sufficient adhesiveness can be ensured.

Therefore, from the viewpoint of the adhesiveness, the percentage of through holes having an opening diameter of 5 µm or less is preferably 40% or less, more preferably 30% or less, and most preferably 20% or less.

The percentage of through holes having an opening diameter of 5 µm or less is obtained by capturing an image of the surface of the aluminum plate from right above using a high-resolution scanning electron microscope (SEM) at magnifications of 1,000 to 10,000 times, measuring the opening diameters of all of the through holes at 20 places in a 10 cm×10 cm range of the obtained SEM photograph, and computing the ratio of the number of through holes having an opening diameter of 5 µm or less to the number of all of the measured through holes.

In addition, as the percentage of through holes having an opening diameter of 40 µm or more decreases, it is possible to suppress, at the time of applying active materials, the generation of protrusions and recesses corresponding to the through holes on the surface of the applied active material, suppress the dropping and bleeding-through of the active materials, uniformly coat the active material surfaces, and improve the coating properties.

Therefore, from the viewpoint of the coating properties, the percentage of through holes having an opening diameter of 40 µm or more is preferably 40% or less, more preferably 30% or less, and most preferably 20% or less.

Furthermore, the percentage of through holes having an opening diameter of 30 µm or more is more preferably 30% or less.

The percentage of through holes having an opening diameter of 40 µm or more is obtained by capturing an image of the surface of the aluminum plate from right above using a high-resolution scanning electron microscope (SEM) at a magnification of 100 times, measuring the opening diameters of all of the through holes at 20 places in a 10 cm×10 cm range of the obtained SEM photograph, and computing the ratio of the number of through holes having an opening diameter of 40 µm or more to the number of all of the measured through holes.

In addition, as the average opening ratio decreases, it is possible to ensure the strength of substrates, suppress substrates being ruptured by tension or the like applied during manufacturing, and improve the handling properties or the productivity. On the other hand, as the average opening ratio increases, the amount of active materials intruding into the through holes increases, and thus sufficient adhesiveness to active materials can be ensured.

Therefore, from the viewpoint of the strength and the adhesiveness, the average opening ratio is 2% or more and 40% or less, preferably 2% or more and 30% or less, and more preferably 4% or more and 20% or less.

The average opening ratio of the through holes is obtained by capturing an image of the surface of the aluminum plate from right above using a high-resolution scanning electron microscope (SEM) at a magnification of 200 times, binarizing (five) 30 mm×30 mm visual fields in the obtained SEM image using image analysis software or the like so as to observe through hole portions and non-through hole portions, computing the ratio (the opening area/the geometric area) from the total opening area of the through holes and the area of the visual fields (the geometric area), and computing the average value of the ratios at the respective visual fields (five places) as the average opening ratio.

In addition, from the viewpoint of the strength, the percentage of through holes in which the ratio S₁/S₀ of the area S₁ of the through holes to the area S₀ of a circle having the long axis of the through hole as the diameter is 0.1 or more and 1 or less is 50% or more.

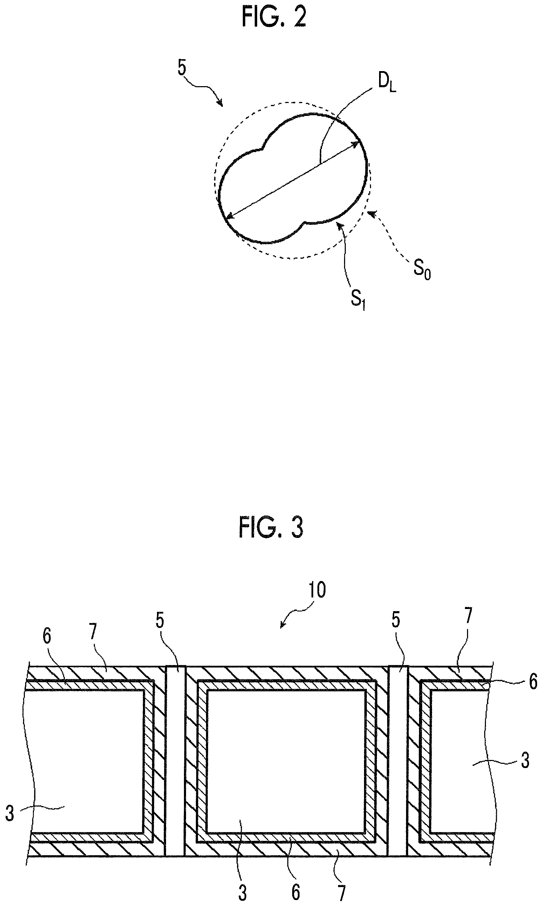

This fact will be described using Fig. 2.

Fig. 2 is a schematic top view illustrating an example of the through hole in an enlarged manner.

In processes of forming the through holes, there are cases in which a plurality of adjacent through holes is connected to one another and thus forms a single through hole. Therefore, as illustrated by the solid line in Fig. 2, the shape of the through hole is not limited to a circle shape and there are cases in which the through hole becomes a long and thin hold. The example of Fig. 2 is a view illustrating a single through hole formed of two through holes being connected to each other, but there are also cases in which three or more through holes are connected to one another.

In a through hole having a shape as illustrated in Fig. 2, the actual area of the through holes indicated by the solid line is represented by S₁. In addition, the maximum value of the distance between the end portions of the original through holes is represented by D1, and the area of a true circle having this long axis DL as the diameter (the circle indicated by the broken line in the drawing) is represented by S₀.

In the present invention, the percentage of through holes in which the ratio S₁/S₀ of the area S₁ to the area S₀ is 0.1 or more and 1 or less is 50% or more.

Meanwhile, the long axis DL is the same as the above-described opening diameter.

The area ratio S₁/S₀ approaching one indicates the shape of the through hole becoming more circular, and the area ratio decreasing indicates the shape of the through hole becoming closer to a long and thin shape. In a case in which the shape of the through hole is a long and thin shape, it is assumed that a front end portion is formed in the through hole, and thus stress concentrates on this front end portion, and the front end portion serves as the starting point of rupturing, and thus the rupture strength is more likely to decrease.

Therefore, as the percentage of through holes in which the area ratio S₁/S₀ is 0.1 or more and 1 or less, that is, through holes having a shape close to a true circle increases, the strength increases, and thus the percentage of through holes in which the area ratio S₁/S₀ is 0.1 or more and 1 or less is 50% or more, preferably 70% or more, and more preferably 90% or more.

In addition, according to the present inventors' studies, it has been clarified that, as the area ratio S₁/S₀ increases, the adhesiveness to active materials improves. Factors that improve the adhesiveness are not clear, but it is assumed that, in a case in which the through holes have a shape close to a true circle, stress does not easily concentrate during the application of the stress, and the degree of deformation of the shape of the through holes decreases, and thus excellent adhesiveness is developed.

The area ratio S₁/S₀ of the through hole is obtained by capturing an image of the surface of the aluminum plate from right above using a high-resolution scanning electron microscope (SEM) at magnifications of 100 to 10,000 times, measuring the area S₁ of the through hole and the length of the long axis for all of the through holes at 20 places in a 10 cm×10 cm range of the obtained SEM photograph, and, for all of the measured through holes, computing the area S₀ of a true circle having the measured value of the long diameter as the diameter, and computing the ratio S₁/S₀ of the area S₁ of the through hole to the area S₀ of the true circle having the long diameter as the diameter.

In addition, the percentage of through holes in which the area ratio S₁/S₀ is 0.1 or more and 1 or less is obtained by computing the percentage of the number of through holes in which the S₁/S₀ ratio reaches 0.1 or more and 1 or less with respect to the number of all of the measured through holes.

In the aluminum plate of the present invention, as described above, in a case in which the average opening diameter and the average opening ratio of the through holes, the percentage of through holes having an opening diameter of 5 µm or less, the percentage of through holes having an opening diameter of 40 µm or more, and, the percentage of through holes in which the area ratio S₁/S₀ is 0.1 or more and 1 or less are set in the predetermined ranges respectively, it is possible to ensure the adhesiveness and coating properties to active materials while sufficiently ensuring the tensile strength.

Here, in the aluminum plate of the present invention, from the viewpoint of improving the predoping characteristics, the maximum value of the inter-hole distance between adjacent through holes is preferably 300 µm, more preferably 250 µm, still more preferably 200 µm, and particularly preferably 100 µm.

In addition, as the average value of the inter-hole distances increases, the predoping characteristics degrade.

Therefore, from the viewpoint of the predoping characteristics, the average value of the inter-hole distances is preferably 150 µm or less and more preferably 80 µm or less.

In a case in which the inter-hole distance between adjacent through holes extends in a large region, in the vicinities of the region, it becomes difficult for lithium ions to reach, and thus the time taken for predoping to be completed becomes long, and it is not possible to efficiently carry out predoping. That is, in a case in which the through holes are unevenly distributed, the diffusivity of lithium ions becomes poor, and the predoping characteristics become poor. Therefore, the maximum value and the average value of the inter-hole distances are set in the above-described ranges, whereby the predoping characteristics can be improved.

The inter-hole distance is obtained by installing a parallel light optical unit on one surface side of the aluminum plate, transmitting parallel light, capturing an image of the surface of the aluminum plate using an optical microscope at a magnification of 100 times on the other surface side of the aluminum plate so as to obtain a photograph, binarizing ten 100 mm×75 mm visual fields in a 10 cm×10 cm range of the obtained photograph using image analysis software or the like, then, carrying out a Voronoi treatment, drawing a boundary line between the through holes, and obtaining an image.

Here, the Voronoi treatment refers to a treatment in which, in a case in which several points are disposed on a plane, the inside of the plane is divided into a plurality of regions depending on the closest point, and lines dividing regions serve as boundary lines. That is, this boundary line is a line formed of a collection of points at the same distance from two closest points. In addition, regions are formed in accordance with the respective points.

Meanwhile, in the present invention, a line at the same distance from the closest locations of two through holes is considered as the boundary line.

In an image on which the Voronoi treatment has been carried out, through holes corresponding to adjacent regions are considered as adjacent through holes.

For two adjacent through holes, lines perpendicular to boundary lines are drawn from the respective end surfaces, and the length of the line having the shortest length is considered as the inter-hole distance.

All inter-hole distances in a 100 mm×75 mm visual field are measured. In ten visual fields, all of the inter-hole distances are measured, the largest value is considered as the maximum value of the inter-hole distance, and the average value of all of the measured inter-hole distances is computed as the average inter-hole distance.

In addition, the predoping characteristics relate to the efficiency of predoping at the time of predoping lithium ions into storage devices in which electrodes having an active material layer formed on an aluminum plate are used, and, as the diffusivity of lithium ions becomes more favorable, the time taken for predoping to be completed becomes shorter, and the efficiency of predoping, that is, the predoping characteristics, increases.

In addition, in the example illustrated in Fig. 1B, a plurality of the through holes 5 are formed in the aluminum substrate 3, but the present invention is not limited thereto, and the aluminum plate may also have a metal layer made of a metal plate covering at least the inner surfaces of the through holes.

Fig. 3 is a schematic cross-sectional view illustrating another example of the aluminum plate of the present invention.

The aluminum plate 10 illustrated in Fig. 3 has a first metal layer 6 and a second metal layer 7, which are made of metal other than aluminum or an alloy, on the front surface and rear surface of the aluminum substrate 3 having the through holes and the inner surfaces (inner walls) of the through holes 5.

As described above, when the metal layer is formed on the inner surfaces of the through holes, it is possible to preferably adjust the average opening diameter of the through holes in a narrow range of approximately 0.1 µm to 20 µm.

The above-described metal layer can be formed by means of a metal coating step described below.

Meanwhile, in the example illustrated in the drawing, the metal layer is formed on the front surface and rear surface of the aluminum substrate 3 and the inner surfaces of the through holes 5, but the constitution is not limited thereto, and the metal layer may be only formed on at least the inner surfaces of the through holes 5.

### <Aluminum substrate>

The aluminum substrate is not particularly limited, and well-known aluminum substrates such as pure aluminum-based plates (for example, 1N30 material, 1085 material, and the like), 3000-based plates (for example, 3003 material and the like), 8000-based plates (for example, 8021 material and the like) can be used. Meanwhile, the aluminum substrate may contain elements other than aluminum (for example, Si, Fe, Cu, and the like), and examples thereof include aluminum substrates containing 0.01% to 0.8% by mass of Si, 0.02% to 2.0% by mass of Fe, and 0.3% by mass or less of Cu.

In addition, the thickness of the aluminum substrate is preferably 5 to 1,000 µm, more preferably 5 to 200 µm, still more preferably 5 to 50 µm, and particularly preferably 8 to 30 µm. Meanwhile, the thickness (5 to 1,000 µm,) of the aluminum substrate refers to the thickness of the aluminum substrate before a coating-forming treatment described below.

In addition, the number of intermetallic compounds in the aluminum substrate is preferably 1,000 to 1,000,000 compounds/mm², more preferably 5,000 to 800,000 compounds/mm², and still more preferably 10,000 to 500,000 compounds/mm².

In addition, the tensile strength of the aluminum substrate is preferably 100 to 350 N/mm² and more preferably 140 to 280 N/mm².

In addition, the elongation of the aluminum substrate is preferably 0.1% to 5.0% and more preferably 0.2% to 3.5%.

In addition, the air permeability of the aluminum substrate is preferably less than 5 sec/100 ml. In a case in which the air permeability is in the above-described range, favorable predoping characteristics can be obtained during the use of the aluminum substrate in electrodes. The air permeability of the aluminum substrate can be measured using a Gurley-type densometer according to JIS P 8117:2009 and an air permeability testing method.

As the aluminum substrate described above, for example, aluminum materials having alloy numbers shown in Table 1 can be used.

**[Table 1]**

| Table 1 | Si (% by mass) | Fe (% by mass) | Cu (% by mass) | Tensile strength (N/mm²) | Elongation (%) |
|---|---|---|---|---|---|
| Alloy No. | | | | | |
| 1085 | 0.02 | 0.04 | <0.01 | 175 | 3.1 |
| 1N30 | 0.11 | 0.45 | 0.02 | 173 | 2.2 |
| 8021 | 0.04 | 1.44 | <0.01 | 161 | 1.3 |
| 3003 | 0.60 | 0.70 | 0.10 | 265 | 2.0 |

### <Active material layer>

The active material layer is not particularly limited, and it is possible to use well-known active material layers that are used in storage devices of the related art.

Specifically, regarding conductive materials, binders, solvents, and the like which the active material and the active material layer may include in a case in which the aluminum plate is used as a collector for positive electrodes, it is possible to appropriately employ materials described in Paragraphs "0077" to "0088" of JP2012-216513A, the content of which is incorporated into the present specification by reference.

In addition, regarding active materials in a case in which the aluminum plate is used as a collector for negative electrodes, it is possible to appropriately employ materials described in Paragraph "0089" of JP2012-216513A, the content of which is incorporated into the present specification by reference.

### [Collectors for storage devices]

As described above, the aluminum plate of the present invention can be used as collectors for storage devices (hereinafter, also referred to as "collectors").

In a case in which an aluminum plate has a plurality of through holes in the thickness direction, collectors enable the predoping of lithium to be completed within a short period of time in the case of using, for example, lithium ion capacitors and enable the more uniform dispersion of lithium. In addition, the adhesiveness to active material layers or activated charcoal becomes favorable, and it is possible to produce storage devices having improved cycle characteristics.

### [Storage device]

Electrodes in which the aluminum plate of the present invention is used as a collector can be used as positive electrodes or negative electrodes in storage devices.

Here, regarding the specific constitution or applications of storage devices (particularly, secondary batteries), it is possible to appropriately employ materials or applications described in Paragraphs "0090" to "0123" of JP2012-216513A, the content of which is incorporated into the present specification by reference.

### <Positive electrode>

A positive electrode for which the aluminum plate of the present invention is used as the collector is a positive electrode having a positive electrode collector in which the aluminum plate is used for the positive electrode and a layer including a positive electrode active material (positive electrode active material layer) which is formed on the surface of the positive electrode collector.

Here, regarding the positive electrode active material and a conductive material, a binding agent, a solvent, and the like which may be included in the positive electrode active material layer, it is possible to appropriately employ the materials described in Paragraphs "0077" to "0088" of JP2012-216513A, the content of which is incorporated herein by reference.

### <Negative electrode>

A negative electrode for which the aluminum plate of the present invention is used as the collector is a negative electrode having a negative electrode collector in which the aluminum plate is used for the negative electrode and a layer including a negative electrode active material which is formed on the surface of the negative electrode collector.

Here, regarding the negative electrode active material, it is possible to appropriately employ the material described in Paragraph "0089" of JP2012-216513A, the content of which is incorporated herein by reference.

In addition, in the example illustrated in Fig. 1C, the aluminum plate of the present invention is used as a collector, but the aluminum plate of the present invention can also be used in other applications. For example, the aluminum plate can be preferably used in heat-resistant fine particle filters, acoustic absorption materials, and the like.

### [Method for manufacturing aluminum plate]

Next, a method for manufacturing an aluminum plate of the present invention will be described.

The method for manufacturing an aluminum plate of the present invention is
a method for manufacturing an aluminum plate having a plurality of through holes in the thickness direction, including
a coating-forming step of forming a coating including an aluminum hydroxide or an aluminum oxide as a main component on the surface of the aluminum substrate,
a through hole-forming step of forming through holes by carrying out an electrolytic dissolution treatment after the coating-forming step, and
a coating-removing step of removing the coating after the through hole-forming step,
in which the coating-forming step is a step of forming the coating by carrying out an electrochemical treatment using an acid, a current density in the electrochemical treatment is 3 A/dm² to 60 A/dm², and a thickness of the coating being formed is 0.05 µm or more and 100 µm or less.

In the present invention, the coating-forming step, the through hole-forming step, and the coating-removing step are provided, the current density during the electrochemical treatment in the coating-forming step is set to 3 A/dm² to 60 A/dm², and the thickness of the coating being formed in the coating-forming step is set to 0.05 µm to 100 µm, whereby it is possible to manufacture aluminum plates in which the average opening diameter of the through holes is 0.1 µm or more and 100 µm or less, the average opening ratio is 2% or more and 40% or less, the percentage of through holes having an opening diameter of 5 µm or less is 40% or less, the percentage of through holes having an opening diameter of 40 µm or more is 40% or less, the percentage of through holes in which the area ratio S₁/S₀ is 0.1 or more and 1 or less is 50% or more, the strength is high, and the coating properties and the adhesiveness to active materials are excellent.

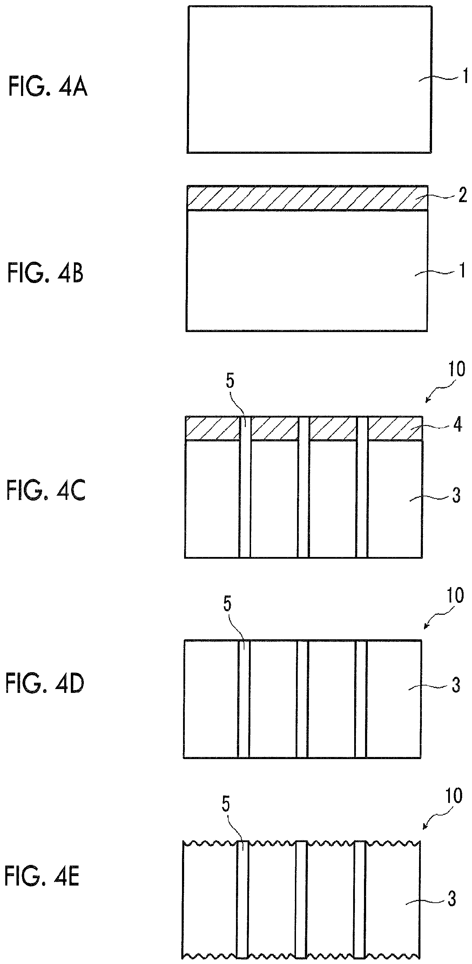

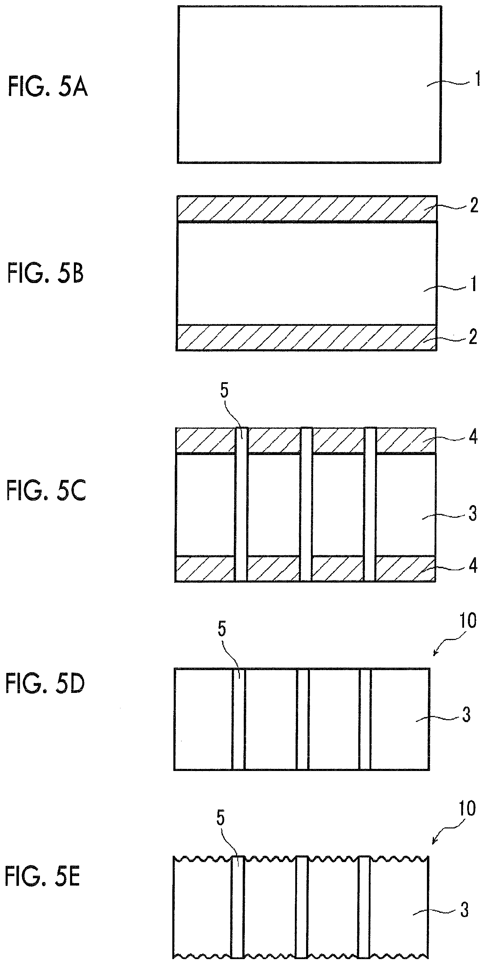

Next, the respective steps of the method for manufacturing an aluminum plate will be described using Figs. 4A to 4E and Figs. 5A to 5E, and then the respective steps will be described in detail.

Figs. 4A to 4E and Figs. 5A to 5E are schematic cross-sectional views illustrating examples of a preferred embodiment of the method for manufacturing an aluminum plate.

The method for manufacturing an aluminum plate is, as illustrated in Figs. 4A to 4E and Figs. 5A to 5E, a manufacturing method including a coating-forming step (Fig. 4A and Fig. 4B and Fig. 5A and Fig. 5B) of forming a coating 2 having an aluminum hydroxide or an aluminum oxide as a main component by carrying out a coating-forming treatment on one main surface (both main surfaces in the aspect illustrated in Figs. 5A to 5E) of an aluminum substrate 1, a through hole-forming step (Fig. 4B and Fig. 4C and Fig. 5B and Fig. 5C) of forming the through holes 5 by carrying out an electrolytic dissolution treatment after the coating-forming step, thereby producing an aluminum plate having an aluminum substrate 3 having the through holes and an aluminum hydroxide coating 4 having the through holes, and a coating-removing step (Fig. 4C and Fig. 4D and Fig. 5C and Fig. 5D) of removing the coating 4 having the through holes after the through hole-forming step, thereby producing the aluminum plate 10 made of the aluminum substrate 3 having the through holes.

In addition, the method for manufacturing an aluminum plate preferably has a roughening treatment step (Fig. 4D and Fig. 4E and Fig. 5D and Fig. 5E) of carrying out an electrochemical roughening treatment on the aluminum substrate 3 having the through holes after the coating-removing step, thereby producing the aluminum plate 10 having a roughened surface.

In the electrolytic dissolution treatment for forming the through holes, at the time of applying power, points at which currents flow in the thickness direction of the coating serve as starting points, and through holes are formed. At this time, in a case in which the thickness of the coating is thin, a large number of starting points are generated, and thus a large number of through holes are formed, and through holes adjacent to one another are linked to one another and thus form a through hole having a long and thin shape. That is, in a case in which the thickness of the coating is thin, through holes having an area ratio S₁/S₀ of less than 0.1 are more likely to be formed.

Therefore, the current density during the electrochemical treatment in the coating-forming step is set to 3 A/dm² to 60 A/dm², and the thickness of the coating being formed is set to 0.05 µm to 100 µm, thereby controlling the number of starting points for through holes and suppressing through holes being linked to one another, which enables an increase in the percentage of through holes having an area ratio S₁/S₀ of 0.1 or more and 1 or less.

Since it is possible to increase the percentage of through holes having an area ratio S₁/S₀ of 0.1 or more and 1 or less and improve the strength, the thickness of the coating being formed in the coating-forming step is preferably 0.05 µm to 10 µm and more preferably 0.05 µm to 5 µm.

### [Coating-forming step]

In the present invention, the coating-forming step in the method for manufacturing an aluminum plate is a step of forming a coating having an aluminum hydroxide or an aluminum oxide (alumina) as a main component by carrying out a coating-forming treatment on the surface of the aluminum substrate.

### <Coating-forming treatment>

The above-described coating-forming treatment is not particularly limited, and it is possible to carry out, for example, the same treatment as well-known aluminum hydroxide coating-forming treatments or aluminum oxide coating-forming treatments of the related art.

As the aluminum hydroxide coating-forming treatment, it is possible to appropriately employ, for example, conditions or devices described in Paragraphs "0013" to "0026" of JP2011-201123A.

In addition, as the aluminum oxide coating-forming treatment, it is possible to employ, for example, conditions or devices described in Paragraphs "0063" to "0073" of JP2012-216513A.

In the present invention, even in a case in which the coating being formed is any one of an aluminum hydroxide coating and an aluminum oxide coating, the conditions of the coating-forming treatment vary in diverse manners depending on electrolytic solutions being used and thus cannot be determined uniformly; however, generally, the concentration of an electrolytic solution in a range of 1% to 80% by mass, the liquid temperature in a range of 5°C to 70°C, the current density in a range of 0.5 to 60 A/dm², the voltage in a range of 1 to 100 V, and the electrolysis duration in a range of 1 second to 20 minutes are appropriate and are adjusted so as to obtain a desired amount of a coating.

In the present invention, in a case in which the coating being formed is an aluminum hydroxide coating, the electrochemical treatment is preferably carried out using nitric acid, hydrochloric acid, sulfuric acid, phosphoric acid, oxalic acid, or a mixed acid of two or more thereof as an electrolytic solution.

In a case in which the electrochemical treatment is carried out in an electrolytic solution containing nitric acid and hydrochloric acid, direct current or alternating current may be applied between the aluminum substrate and a counter electrode. In a case in which direct current is applied to the aluminum substrate, the current density is preferably 3 to 60 A/dm² and more preferably in a range of 5 to 50 A/dm². In a case in which the electrochemical treatment is carried out continuously, the electrochemical treatment is preferably carried out using a liquid power feeding method in which power is fed to the aluminum substrate through an electrolytic solution.

In addition, in a case in which the coating being formed is an aluminum oxide coating, anodization that is carried out in sulfuric acid solutions is preferred.

In a case in which anodization is carried out in an electrolytic solution containing sulfuric acid, direct current or alternating current may be applied between the aluminum substrate and a counter electrode. In a case in which direct current is applied to the aluminum substrate, the current density is preferably 3 to 60 A/dm² and more preferably in a range of 5 to 40 A/dm². In a case in which the anodization is carried out continuously, the anodization is preferably carried out using a liquid power feeding method in which power is fed to the aluminum substrate through an electrolytic solution.

### [Through hole-forming step]

The through hole-forming step is a step in which an electrolytic dissolution treatment is carried out after the coating-forming step, thereby forming through holes.

### <Electrolytic dissolution treatment>

The above-described electrolytic dissolution treatment is not particularly limited, and it is possible to use direct current or alternating current and use an acidic solution as an electrolytic solution. Among acidic solutions, the electrochemical treatment is preferably carried out using at least one acid of nitric acid or hydrochloric acid, and the electrochemical treatment is more preferably carried out using an acid of at least one of sulfuric acid, phosphoric acid, or oxalic acid in addition to the above-described acids.

In the present invention, as the acidic solution which is the electrolytic solution, it is possible to use, in addition to the above-described acids, electrolytic solutions described in the respective specifications of US4,671,859A, US4,661,219A, US4,618,405A, US4,600,482A, US4,566,960A, US4,566,958A, US4,566,959A, US4,416,972A, US4,374,710A, US4,336,113A, and US4,184,932A.

The concentration of the acidic solution is preferably in a range of 0.1% by mass to 2.5% by mass and more preferably in a range of 0.2% by mass to 2.0% by mass. In addition, the liquid temperature of the acidic solution is preferably in a range of 20°C to 80°C and more preferably in a range of 30°C to 60°C.

In addition, as an aqueous solution including the above-described acid as a main body, it is possible to use an aqueous solution obtained by adding at least one of a nitric acid compound having nitric acid ions such as aluminum nitrate, sodium nitrate, or ammonium nitrate, a hydrochloric acid compound having hydrochloric acid ions such as aluminum chloride, sodium chloride, or ammonium chloride, or a sulfuric acid compound having sulfuric acid ions such as aluminum sulfate, sodium sulfate, or ammonium sulfate to an aqueous solution of an acid which has a concentration of 1 to 100 g/L in a range of 1 g/L to saturation.

In addition, the aqueous solution including the above-described acid as the main body may contain metals which are included in an aluminum alloy such as iron, copper, manganese, nickel, titanium, magnesium, and silica. Preferably, a liquid obtained by adding aluminum chloride, aluminum nitrate, aluminum sulfate, or the like to an aqueous solution of an acid having a concentration in a range of 0.1% by mass to 2% by mass so that the concentration of aluminum ions falls in a range of 1 g/L to 100 g/L may be used.

In the electrochemical dissolution treatment, direct current is mainly used; however, in a case in which alternating current is used, the alternating-current power source wave is not particularly limited, and a sine wave, a square wave, a trapezoidal wave, a triangular wave, and the like can be used, and, among these, a square wave or a trapezoidal wave is preferred, and a trapezoidal wave is particularly preferred.

### (Nitric acid electrolysis)

In the present invention, it is possible to easily form a plurality of through holes which has an average opening diameter of 0.1 µm or more and 100 µm or less, an average opening ratio of 2% or more and 40% or less, a percentage of through holes having an opening diameter of 5 µm or less of 40% or less, a percentage of through holes having an opening diameter of 40 µm or more of 40% or less, and a percentage of through holes in which the area ratio S₁/S₀ is 0.1 or more and 1 or less of 50% or more by an electrochemical dissolution treatment using an electrolytic solution containing nitric acid as a main body (hereinafter, also abbreviated as "nitric acid dissolution treatment").

Here, the nitric acid dissolution treatment is preferably an electrolytic treatment which is carried out using direct current under conditions of an average current density set to 5 A/dm² or higher and a total quantity of electricity set to 50 C/dm² or greater since it is easy to control dissolution points of through hole formation. Meanwhile, the average current density is preferably 100 A/dm² or lower, and the total quantity of electricity is preferably 10,000 C/dm² or less and more preferably 4,000 C/dm² or less.

In addition, the concentration or temperature of the electrolytic solution in the nitric acid electrolysis is not particularly limited, and it is possible to carry out electrolysis using a nitric acid electrolytic solution having a high concentration, for example, a nitric acid concentration in a range of 15% by mass to 35% by mass at 30°C to 60°C or carry out electrolysis using a nitric acid electrolytic solution having a nitric acid concentration in a range of 0.7% by mass to 2% by mass at a high temperature, for example, at 80°C or higher.

In addition, it is possible to carry out electrolysis using an electrolytic solution obtained by mixing at least one of sulfuric acid, oxalic acid, and phosphoric acid having a concentration of 0.1% to 50% by mass into the above-described nitric acid electrolytic solution.

### (Hydrochloric acid electrolysis)

In the present invention, it is also possible to easily form a plurality of through holes which has an average opening diameter of 0.1 µm or more and 100 µm or less, an average opening ratio of 2% or more and 40% or less, a percentage of through holes having an opening diameter of 5 µm or less of 40% or less, a percentage of through holes having an opening diameter of 40 µm or more of 40% or less, and a percentage of through holes in which the area ratio S₁/S₀ is 0.1 or more and 1 or less of 50% or more by an electrochemical dissolution treatment using an electrolytic solution containing hydrochloric acid as a main body (hereinafter, also abbreviated as "hydrochloric acid dissolution treatment").

Here, the hydrochloric acid dissolution treatment is preferably an electrolytic treatment which is carried out using direct current under conditions of an average current density set to 5 A/dm² or higher and a total quantity of electricity set to 50 C/dm² or greater since it is easy to control dissolution points of through hole formation. Meanwhile, the average current density is preferably 100 A/dm² or lower, and the total quantity of electricity is preferably 10,000 C/dm² or less and more preferably 4,000 C/dm² or less.

In addition, the concentration or temperature of the electrolytic solution in the nitric acid electrolysis is not particularly limited, and it is possible to carry out electrolysis using a nitric acid electrolytic solution having a high concentration, for example, a nitric acid concentration in a range of 10% by mass to 35% by mass at 30°C to 60°C or carry out electrolysis using a nitric acid electrolytic solution having a nitric acid concentration in a range of 0.7% by mass to 2% by mass at a high temperature, for example, at 80°C or higher.

In addition, it is possible to carry out electrolysis using an electrolytic solution obtained by mixing at least one of sulfuric acid, oxalic acid, and phosphoric acid having a concentration of 0.1% to 50% by mass into the above-described nitric acid electrolytic solution.

### [Coating-removing step]

The coating-removing step is a step of removing the coating by carrying out a chemical dissolution treatment.

The coating-removing step is capable of removing the coating by, for example, carrying out an acid etching treatment or an alkali etching treatment described below.

### <Acid etching treatment>

The above-described dissolution treatment is, depending on the kind of the formed coating, a treatment in which the aluminum hydroxide coating is dissolved using a solution that dissolves aluminum hydroxides earlier than aluminum (hereinafter, referred to as "the aluminum hydroxide dissolution liquid") or a treatment in which the aluminum oxide coating is dissolved using a solution that dissolves aluminum oxides earlier than aluminum (hereinafter, referred to as "the aluminum oxide dissolution liquid").

Here, the aluminum hydroxide dissolution liquid is preferably an aqueous solution including at least one selected from the group consisting of, for example, nitric acid, hydrochloric acid, sulfuric acid, phosphoric acid, oxalic acid, chromium compounds, zirconium-based compounds, titanium-based compounds, lithium salts, cerium salts, magnesium salts, sodium silicofluoride, zinc fluoride, manganese compounds, molybdenum compounds, magnesium compounds, barium compounds, and halogen single bodies.

In addition, the aluminum oxide dissolution liquid is preferably an aqueous solution including at least one selected from the group consisting of, for example, chromium compounds, nitric acid, sulfuric acid, phosphoric acid, zirconium-based compounds, titanium-based compounds, lithium salts, cerium salts, magnesium salts, sodium silicofluoride, zinc fluoride, manganese compounds, molybdenum compounds, magnesium compounds, barium compounds, and halogen single bodies.

Specific examples of the chromium compounds include chromium (III) oxide, anhydrous chromium (VI) acid, and the like.

Examples of the zirconium-based compounds include ammonium fluorozirconate, zirconium fluoride, and zirconium chloride.

Examples of the titanium-based compounds include titanium oxide and titanium sulfide.

Examples of the lithium salts include lithium fluoride and lithium chloride.

Examples of the cerium salts include cerium fluoride and cerium chloride.

Examples of the magnesium salts include magnesium sulfide.

Examples of the manganese compounds include sodium permanganate and calcium permanganate.

Examples of the molybdenum compounds include sodium molybdate.

Examples of the magnesium compounds include magnesium fluoride pentahydrate.

Examples of the barium compounds include barium oxide, barium acetate, barium carbonate, barium chlorate, barium chloride, barium fluoride, barium iodide, barium lactate, barium oxalate, barium perchlorate, barium selenate, barium selenite, barium stearate, barium sulfite, barium titanate, barium hydroxide, barium nitrate, hydrates thereof, and the like.

Among the above-described barium compounds, barium oxide, barium acetate, and barium carbonate are preferred, and barium oxide is particularly preferred.

Examples of the halogen single bodies include chlorine, fluorine, and bromine.

Among these, the aluminum hydroxide dissolution liquid is preferably an aqueous solution containing an acid, examples of the acid include nitric acid, hydrochloric acid, sulfuric acid, phosphoric acid, oxalic acid, and the like, and the acid may be a mixture of two or more acids.

The concentration of the acid is preferably 0.01 mol/L or higher, more preferably 0.05 mol/L or higher, and still more preferably 0.1 mol/L or higher. There is no particular upper limit, but the upper limit is generally 10 mol/L or lower and more preferably 5 mol/L or lower.

In addition, the aluminum oxide dissolution liquid is preferably an aqueous solution containing an acid, examples of the acid include sulfuric acid, phosphoric acid, nitric acid, hydrochloric acid, and the like, and the acid may be a mixture of two or more acids.

The concentration of the acid is preferably 0.01 mol/L or higher, more preferably 0.05 mol/L or higher, and still more preferably 0.1 mol/L or higher. There is no particular upper limit, but the upper limit is generally 10 mol/L or lower and more preferably 5 mol/L or lower.

The dissolution treatment is carried out by bringing the aluminum substrate on which the coating is formed into contact with the above-described dissolution liquid. A method for bringing the aluminum substrate into contact with the alumina dissolution liquid is not particularly limited, and examples thereof include a dipping method and a spraying method. Among these, the dipping method is preferred.

The dipping method is a treatment in which the aluminum substrate on which the coating is formed is dipped into the above-described dissolution liquid. During the dipping treatment, it is preferable to carry out stirring since the treatment is carried out evenly.

The duration of the dipping treatment is preferably 10 minutes or longer, more preferably one hour or longer, and still more preferably three hours or longer and five hours or longer.

### <Alkali etching treatment>

The alkali etching treatment is a treatment in which the surface layer is dissolved by bringing the coating into contact with an alkali solution.

Examples of alkalis that can be used in the alkali solution include caustic alkalis and alkali metal salts. Specific examples of caustic alkalis include sodium hydroxide (caustic soda) and caustic potash. In addition, examples of alkali metal salts include alkali metal silicates such as sodium metasilicate, sodium silicate, potassium metasilicate, and potassium silicate; alkali metal carbonates such as sodium carbonate and potassium carbonate; alkali metal aluminate such as sodium aluminate and potassium aluminate; alkali metal aldonates such as sodium gluconate and potassium gluconate; and alkali metal hydrogenphosphate such as sodium diphosphate, potassium diphosphate, sodium triphosphate, and potassium triphosphate. Among these, solutions of caustic alkalis and solutions containing both caustic alkali and alkali metal aluminate are preferred from the viewpoint of the fast etching rates and the cheap prices. Particularly, an aqueous solution of sodium hydroxide is preferred.

The concentration of the alkali solution is preferably in a range of 0.1% by mass to 50% by mass and more preferably in a range of 0.2% by mass to 10% by mass. In a case in which the alkali solution has aluminum ions dissolved therein, the concentration of aluminum ions is preferably in a range of 0.01% by mass to 10% by mass and more preferably in a range of 0.1% by mass to 3% by mass. The temperature of the alkali solution is preferably in a range of 10°C to 90°C. The treatment duration is preferably in a range of 1 second to 300 seconds.

Examples of a method for bringing the coating into contact with the alkali solution include a method in which the aluminum substrate on which the coating is formed is passed through a tank including the alkali solution, a method in which the aluminum substrate on which the coating is formed is immersed in a tank including the alkali solution, and a method in which the alkali solution is sprayed to the surface (the coating) of the aluminum substrate on which the aluminum hydroxide coating is formed.

### [Roughening treatment step]

In the present invention, the arbitrary roughening treatment step which the method for manufacturing an aluminum plate may have is a step of roughening the front surface or the rear surface of the aluminum substrate by carrying out an electrochemical roughening treatment (hereinafter, also abbreviated as "the electrolytic roughening treatment") on the aluminum substrate from which the coating is removed.

When the electrolytic roughening treatment is carried out and the surface of the aluminum substrate is roughened as described above, adhesiveness to layers including active material improves, and an increase in the surface area leads to an increase in the contact area, and thus the capacity maintenance rate of storage devices in which aluminum plates (collectors) obtained using the manufacturing method of the present invention are used enhance.

In the electrolytic roughening treatment, it is possible to appropriately employ, for example, conditions or devices described in Paragraphs "0041" to "0050" of JP2012-216513A.

In addition, in the above-described embodiment, a constitution in which the roughening treatment is carried out after the formation of the through holes is provided, but the constitution is not limited thereto, and a constitution in which the through holes are formed after the roughening treatment may be provided.

### <Nitric acid electrolysis>

In the present invention, it is possible to easily form recessed portions having an average opening diameter in a range of 0.5 µm to 3.0 µm at a density of 10 recess portions/100 µm² or higher by means of an electrochemical roughening treatment in which an electrolytic solution including nitric acid as a main body is used (hereinafter, also abbreviated as "the nitric acid electrolysis").

Here, the nitric acid electrolysis is preferably an electrolytic treatment which is carried out using alternating current under conditions of a peak current density set to 30 A/dm² or higher, an average current density set to 13 A/dm² or higher, and a quantity of electricity set to 150 C/dm² or greater since it becomes possible to form uniform recessed portions at a high density. Meanwhile, the peak current density is preferably 100 A/dm² or lower, the average current density is preferably 40 A/dm² or lower, and the quantity of electricity is preferably 400 C/dm² or less.

In addition, the concentration or temperature of the electrolytic solution in the nitric acid electrolysis is not particularly limited, and it is possible to carry out electrolysis using a nitric acid electrolytic solution having a high concentration, for example, a nitric acid concentration in a range of 15% by mass to 35% by mass at 30°C to 60°C or carry out electrolysis using a nitric acid electrolytic solution having a nitric acid concentration in a range of 0.7% by mass to 2% by mass at a high temperature, for example, at 80°C or higher.

### <Hydrochloric acid electrolysis>

In the present invention, it is possible to form recessed portions having an average opening diameter in a range of 0.5 µm to 3.0 µm at a density of 10 recess portions/100 µm² or higher by means of an electrochemical roughening treatment in which an electrolytic solution including hydrochloric acid as a main body is used (hereinafter, also abbreviated as "the hydrochloric acid electrolysis").

Here, the hydrochloric acid electrolysis is preferably an electrolytic treatment which is carried out using alternating current under conditions of a peak current density set to 30 A/dm² or higher, an average current density set to 13 A/dm² or higher, and a quantity of electricity set to 150 C/dm² or greater since it becomes possible to form uniform recessed portions at a high density. Meanwhile, the peak current density is preferably 100 A/dm² or lower, the average current density is preferably 40 A/dm² or lower, and the quantity of electricity is preferably 400 C/dm² or less.

### [Metal coating step]

In the present invention, the method for manufacturing an aluminum plate preferably has a metal coating step in which part or all of the surfaces of the aluminum substrate including at least the inner walls of the through holes are coated with a metal other than aluminum after the above-described coating-removing step since it is possible to adjust the average opening diameter of the through holes formed by means of the above-described electrolytic dissolution treatment to be small in a range of approximately 0.1 µm to 20 µm.

Here, "part or all of the surfaces of the aluminum substrate including at least the inner walls of the through holes are coated with a metal other than aluminum" means that, out of all the surfaces of the aluminum substrate including the inner walls of the through holes, at least the inner walls of the through holes are coated, and the surfaces other than the inner walls may not be coated or may be wholly or partially coated.

Hereinafter, the metal coating step will be described using Fig. 3.

As described above, the aluminum plate 10 illustrated in Fig. 3 is an aspect in which first metal layers 6 and second metal layers 7 which are made of metals other than aluminum or alloys are provided on the front surface and the rear surface of the aluminum substrate 3 having the through holes and the inner walls of the through holes and can be produced by carrying out, for example, a substitution treatment and a plating treatment, which will be described below, on the aluminum substrate illustrated in Figs. 4D or 5D.

### <Substitution treatment>

The substitution treatment is a treatment in which part or all of the surfaces of the aluminum substrate including at least the inner walls of the through holes are immersion-plated with zinc or a zinc alloy.

Examples of an immersion plating liquid include a mixed solution of 120 g/l of sodium hydroxide, 20 g/l of zinc oxide, 2 g/l of crystalline ferric chloride, 50 g/l of potassium sodium tartrate, and 1 g/l of sodium nitrate, and the like.

In addition, commercially available Zn or Zn alloy plating liquid may be used, and, for example, SUB STAR Zn-1, Zn-2, Zn-3, Zn-8, Zn-10, Zn-111, Zn-222, Zn-291, and the like, all manufactured by Okuno Chemical Industries Co., Ltd., can be used.

The immersion duration of the aluminum substrate in the above-described immersion plating liquid is preferably in a range of 15 seconds to 40 seconds.

### <Plating treatment>

In a case in which a zinc coating is formed by immersion-plating the surfaces of the aluminum substrate with zinc or an zinc alloy by means of the above-described substitution treatment, it is preferable to carry out, for example, a plating treatment in which the zinc coating is substituted with nickel by means of electroless plating described below and then a variety of metals are precipitated by means of electrolytic plating described blow.

### (Electroless plating treatment)

As a nickel plating liquid that is used in an electroless plating treatment, it is possible to use a broad range of commercially available products, and examples thereof include an aqueous solution including 30 g/l of nickel sulfate, 20 g/I of sodium phosphinate, and 50 g/l of ammonium citrate, and the like.

In addition, examples of a nickel alloy plating liquid include Ni-P alloy plating liquids in which a phosphorus compound serves as a reducing agent, Ni-B plating liquids in which a boron compound serves as a reducing agent, and the like.

The immersion duration in the above-described nickel plating liquid or nickel alloy plating liquid is preferably in a range of 15 seconds to 10 minutes, and the immersion temperature is preferably in a range of 30°C to 90°C.

### (Electrolytic plating treatment)

In a case in which, for example, electroplating of Cu is carried out as an electrolytic plating treatment, a plating liquid is, for example, a plating liquid obtained by adding 60 to 110 g/L of copper sulfate, 160 to 200 g/L of sulfuric acid, and 0.1 to 0.15 mL/L of hydrochloric acid to pure water and further adding 1.5 to 5.0 mL/L of TOP LUCINA SF base WR, 0.5 to 2.0 mL/L of TOP LUCINA SF-B, and 3.0 to 10 mL/L of TOP LUCINA SF leveller, all manufactured by Okuno Chemical Industries Co., Ltd., thereto as additives.

The immersion duration in the above-described copper plating liquid is not particularly limited since the immersion duration is dependent on the thickness of a Cu film, and, in a case in which, for example, a 2 µm-thick Cu film is formed, the aluminum substrate is preferably immersed in the plating liquid for approximately five minutes at a current density of 2 A/dm², and the immersion temperature is preferably in a range of 20°C to 30°C.

### [Water washing treatment]

In the present invention, it is preferable to carry out water washing after the completion of the steps of the respective treatments described above. In the water washing, it is possible to use pure water, well water, tap water, or the like. In order to prevent the treatment liquids from being carried to the subsequent steps, a nipping device may be used.

### EXAMPLES

Hereinafter, the present invention will be described in more detail on the basis of examples. Materials, amounts used, percentages, treatment contents, treatment orders, and the like described in the following examples can be appropriately modified within the scope of the gist of the present invention. Therefore, the scope of the present invention should not be interpreted in a limited manner by the examples described below.

### [Example 1]

### <Production of aluminum plate for collector>

A treatment which will be described below was carried out on the surface of an aluminum substrate having an average thickness of 20 µm and a size of 200 mmx300 mm (JIS H-4160, alloy number: 1085-H, aluminum purity: 99.85%), thereby producing an aluminum plate for a collector.

### (a1) Aluminum hydroxide coating-forming treatment (coating-forming step)

An electrolytic treatment was carried out using an electrolytic solution (nitric acid concentration: 1%, sulfuric acid concentration: 0.2%, aluminum concentration: 0.5 %) which was held at 50°C and the above-described aluminum substrate as a cathode, thereby forming an aluminum hydroxide coating on the aluminum substrate. Meanwhile, the electrolytic treatment was carried out using a direct-current power supply. The direct current density was set to 33 A/dm², and a direct current was applied for 30 seconds.

After the formation of the aluminum hydroxide coating, the aluminum hydroxide coating was washed with water by means of spraying.

The thickness of the aluminum hydroxide coating was measured by observing a cross section, which was cut out by means of focused ion beam (FIB) cutting, using SEM and was found out to be 1.5 µm.

### (b1) Electrolytic dissolution treatment (through hole-forming step)

Next, an electrolytic treatment was carried out under conditions of the current density set to 25 A/dm² and the total quantity of electricity being 800 C/dm² using an electrolytic solution (nitric acid concentration: 1%, sulfuric acid concentration: 0.2%, aluminum concentration: 0.5 %) which was held at 50°C and the aluminum substrate as an anode, and through holes were formed in the aluminum substrate and the aluminum hydroxide coating. Meanwhile, the electrolytic treatment was carried out using direct-current power source waves.

After the formation of the through holes, the aluminum substrate and the aluminum hydroxide coating were washed with water by means of spraying and were dried.

### (c1) Aluminum hydroxide coating-removing treatment (coating-removing step)

Next, the aluminum substrate that had been subjected to the electrolytic dissolution treatment was immersed in an aqueous solution (liquid temperature: 35°C) having an aluminum hydroxide concentration of 5% by mass and an aluminum ion concentration of 0.5% by mass for 30 seconds and was then immersed in an aqueous solution (liquid temperature: 50°C) having a sulfuric acid concentration of 30% and an aluminum ion concentration of 0.5% by mass for 20 seconds, thereby dissolving and removing the aluminum hydroxide coating.

After that, the aluminum substrate was washed with water by means of spraying and was dried, thereby producing an aluminum plate having the through holes.

### <Measurement of through holes>

The average opening diameter and the average opening ratio of the through holes, the percentage of through holes of 5 µm or less, the percentage of through holes of 40 µm or more, and, the percentage of through holes in which the S₁/S₀ ratio is 0.1 or more and 1 or less in the produced aluminum plate were measured using the following method.

### (Average opening diameter)

The average opening diameter of the through holes was obtained by capturing an image of the surface of the aluminum plate from right above using a high-resolution scanning electron microscope (SEM) at magnifications changed in a range of 100 to 10,000 times so as to capture the entire circumstances of the through holes, extracting at least 20 through holes having a circumference that continues in a ring shape from the obtained SEM image, scanning the opening diameters, and computing the average value thereof as the average opening diameter.

Meanwhile, the maximum value of the distance between the end portions of the through hole portion was measured as the opening diameter. That is, since the shape of the opening portion of the through hole is not limited to a substantial circle shape, in a case in which the shape of the opening portion was not a circle shape, the maximum value of the distances between the end portions of the through hole portion was considered as the opening diameter. Therefore, for example, in the case of a through hole having a shape in which two or more through holes were integrated together, this through hole was considered as a single through hole, and the maximum value of the distances between the end portions of the through hole portion was considered as the opening diameter.

### (Average opening ratio)

The average opening ratio of the through holes was obtained by capturing an image of the surface of the aluminum plate from right above using a high-resolution scanning electron microscope (SEM) at a magnification of 200 times, binarizing (five) 30 mm×30 mm visual fields in the obtained SEM image using image analysis software or the like so as to observe through hole portions and non-through hole portions, computing the ratio (the opening area/the geometric area) from the total opening area of the through holes and the area of the visual fields (the geometric area), and computing the average value of the ratios at the respective visual fields (five places) as the average opening ratio.

### (Percentage of through holes of 5 µm or less)

The percentage of through holes having an opening diameter of 5 µm or less was obtained by capturing an image of the surface of the aluminum plate from right above using a high-resolution scanning electron microscope (SEM) at a magnification of 1,000 times, measuring the opening diameters of all of the through holes in (five) 30 mmx30 mm visual fields in a 10 cm×10 cm range of the obtained SEM photograph, and computing the ratio of the number of through holes having an opening diameter of 5 µm or less to the number of all of the measured through holes.

### (Percentage of through holes of 40 µm or more)

The percentage of through holes having an opening diameter of 40 µm or more was obtained by capturing an image of the surface of the aluminum plate from right above using a high-resolution scanning electron microscope (SEM) at a magnification of 100 times, measuring the opening diameters of all of the through holes in (five) 30 mmx30 mm visual fields in a 10 cm×10 cm range of the obtained SEM photograph, and computing the ratio of the number of through holes having an opening diameter of 40 µm or more to the number of all of the measured through holes.

### (Percentage of through holes in which S₁/S₀ ratio is 0.1 or more and 1 or less)

The ratio S₁/S₀ was obtained by capturing an image of the surface of the aluminum plate from right above using a high-resolution scanning electron microscope (SEM) at a magnification of 100 times, measuring the area S₁ of the through hole and the length of the long axis for all of the through holes in (five) 30 mmx30 mm visual fields in a 10 cm×10 cm range of the obtained SEM photograph.

For all of the measured through holes, the area S₀ of a true circle having the measured value of the long diameter as the diameter was computed, and the ratio S₁/S₀ of the area S₁ of the through hole to the area S₀ of the true circle having the long diameter as the diameter was obtained.

The percentage of the number of through holes in which the S₁/S₀ ratio reached 0.1 or more and 1 or less with respect to the number of all of the measured through holes was computed.

### [Examples 2 to 11 and Comparative Examples 1 to 3]

Aluminum substrates were produced and through holes were measured in the same manner as in Example 1 except for the fact that the kind of the aluminum substrate, the direct current density in the electrolytic treatment described in (a1), and the nitric acid concentration and the total quantity of electricity in the electrolytic dissolution treatment in (b1) were changed as shown in Table 2.

### [Evaluation]

### <Rupture strength>

Tensile tests were carried out on the produced aluminum plates, and the rupture strengths were measured.

Specifically, a piece having the shape of the No. 5 test specimen described in JIS Z2241:2011 was cut out so as to produce a sample, the sample was installed in clamps in a tensile strength tester, and the rupture strength was measured at a tension rate of 2 mm/min.

### <Coating properties>

Active material layers were formed on both surfaces of the produced aluminum plates, and the coating properties were evaluated on the basis of the presence or absence of unevenness on the surfaces of the active material layers.

First, a slurry was prepared by adding and dispersing active charcoal powder (100 parts by mass) having a specific surface area of 1,950 m²/g as an active material, acetylene black (10 parts by mass), an acrylic binder (7 parts by mass), and carboxymethyl cellulose (4 parts by mass) to and in water.

Next, the prepared slurry was applied onto both surfaces of an aluminum plate in which through holes were formed using a die coater so as to obtain a total thickness of 200 µm and was dried at 120°C for 30 minutes, thereby forming an active material layer on the surface of the aluminum plate.

Whether or not unevenness was seen on the surface of the formed active material layer was visually evaluated, and a case in which unevenness having a diameter of 40 µm or greater was invisible was evaluated to be A, a case in which unevenness having a diameter in a range of 40 to 70 µm was visible was evaluated to be B, a case in which unevenness having a diameter of 70 to 100 µm was visible was evaluated to be C, and a case in which unevenness having a diameter of 100 µm or greater was visible was evaluated to be D.

### <Adhesiveness>

The adhesiveness between the active material layer and the aluminum plate was measured using a peeling testing method.

Specifically, the aluminum plate having the active material layers formed thereon, which was produced for the evaluation of the coating properties, was cut to a width of 20 mm, thereby producing a sample. Double sided tape (double sided tape manufactured by 3M Corporation) was attached to both surfaces of an SUS plate, and the evaluation sample was attached to one surface of the double sided tape. The portion of the SUS plate was fixed to one clamp in the tensile strength tester, the front end of the evaluation sample bent 180 degrees was fixed to the other clamp, and a 180-degree peeling test was carried out. The tension rate was set to 100 mm/min.

After peeling, the tape surface and the surface of the aluminum plate for a collector were visually evaluated. Specifically, the aluminum plate for a collector on which the area ratio of the remaining active material layer was 99% or more was evaluated as A, the aluminum plate for a collector on which the area ratio of the remaining active material layer was 95% or more and less than 99% was evaluated as B, the aluminum plate for a collector on which the area ratio of the remaining active material layer was 90% or more and less than 95% was evaluated as C, and the aluminum plate for a collector on which the area ratio of the remaining active material layer was less than 90% was evaluated as D.

The evaluation results are shown in Table 2.

Meanwhile, in the column of the kind of the aluminum substrate in Table 2, 1N30 represents an aluminum material of JIS H-4160, Alloy No.: 1N30-H, and an aluminum purity of 99.30%, 3003 represents an aluminum material of JIS H-4160, Alloy No.: 3003-H, and an aluminum purity of 96.00%, and 8021 represents an aluminum material of JIS H-4160, Alloy No.: 8021-H, and an aluminum purity of 97.50%.

**[Table 2]**

| | Production conditions | | | | | | Through hole | | | | | Evaluation | | |
|---|---|---|---|---|---|---|---|---|---|---|---|---|---|---|
| | Aluminum substrate | | Coating-forming treatment | | Electrolytic dissolution treatment | | Average opening diameter µm | Average opening ratio % | Percentage of through holes of 5 µm or less % | Percentage of through holes of 40 µm or more % | Percentage of through holes having S₁/S₀ ratio of 0.1 to 1 % | Rupture strength N/cm | Coating properties | Adhesiveness |
| | Kind | Thickness µm | Direct current density A/dm² | Coating thickness µm | Nitric acid concentration wt% | Quantity of electricity C/dm² | | | | | | | | |
| Example 1 | 1085 | 20 | 33 | 1.5 | 1 | 800 | 20 | 5 | 31 | 11 | 95 | 18 | A | C |
| Example 2 | 1085 | 20 | 41 | 2.5 | 1 | 800 | 28 | 5 | 18 | 25 | 95 | 18 | B | B |
| Example 3 | 1085 | 20 | 50 | 3.5 | 1 | 800 | 35 | 5 | 10 | 35 | 95 | 18 | B | B |
| Example 4 | 1085 | 20 | 33 | 1.3 | 1 | 1000 | 25 | 7 | 20 | 20 | 95 | 15 | B | B |
| Example 5 | 1085 | 20 | 33 | 1.5 | 1 | 2500 | 35 | 35 | 8 | 40 | 95 | 10 | C | A |
| Example 6 | 1085 | 20 | 21 | 0.8 | 50 | 800 | 25 | 5 | 20 | 20 | 75 | 13 | B | C |
| Example 7 | 1085 | 20 | 9 | 0.2 | 50 | 800 | 35 | 5 | 10 | 32 | 55 | 11 | B | C |
| Example 8 | 1085 | 20 | 33 | 1.5 | 1 | 1200 | 26 | 12 | 15 | 30 | 95 | 13 | B | B |
| Example 9 | 1N30 | 20 | 33 | 1.4 | 1 | 2500 | 35 | 35 | 8 | 40 | 95 | 10 | C | A |
| Example 10 | 3003 | 20 | 33 | 1.3 | 1 | 2500 | 35 | 35 | 8 | 40 | 95 | 11 | C | A |
| Example 11 | 8021 | 20 | 33 | 1.2 | 1 | 2500 | 35 | 35 | 8 | 40 | 95 | 11 | C | A |
| Comparative Example 1 | 1085 | 20 | 33 | 1.2 | 1 | 400 | 6 | 1 | 65 | 3 | 95 | 20 | B | D |
| Comparative Example 2 | 1085 | 20 | 33 | 1.4 | 1 | 5000 | 120 | 45 | 0 | 95 | 95 | 8 | D | A |
| Comparative Example 3 | 1085 | 20 | 2 | 0.03 | 100 | 800 | 40 | 5 | 7 | 40 | 45 | 7 | D | D |

From the results shown in Table 2, it is found that the aluminum plate of the present invention in which the average opening diameter of the through holes is 0.1 µm or more and 100 µm or less, the average opening ratio of the through holes is 2% or more and 40% or less, the percentage of through holes having an opening diameter of 5 µm or less is 40% or less, the percentage of through holes having an opening diameter of 40 µm or more is 40% or less, and the percentage of through holes in which the ratio S₁/S₀ of the area S₁ of the through holes to the area S₀ of a circle having the long axis of the through hole as the diameter is 0.1 or more and 1 or less is 50% or more is capable of increasing the rupture strength, the coating properties, and the adhesiveness compared with the comparative examples.

In addition, from the comparison among Examples 2, 6, and 7, it is found that, as the percentage of through holes in which the S₁/S₀ ratio is 0.1 or more and 1 or less increases, the rupture strength increases, and the percentage is preferably 70% or more and more preferably 90% or more.

In addition, from the comparison among Examples 2, 4, 5, 8, and the like, it is found that, as the average opening ratio decreases, the rupture strength increases, and the average opening ratio is preferably 30% or less.

In addition, from the comparison among Examples 1 to 5 and the like, it is found that, as the percentage of through holes having an opening diameter of 5 µm or less decreases, the adhesiveness improves, and the percentage is preferably 30% or less, and as the percentage of through holes having an opening diameter of 40 µm or more decreases, the coating properties improve, and the percentage is preferably 30% or less.

From the above description, the effects of the present invention are evident. Explanation of References

1: aluminum substrate
2: aluminum hydroxide coating
3: aluminum substrate having through holes
4: aluminum hydroxide coating having through holes
5: through hole
6: first metal layer
7: second metal layer
10: aluminum plate
30: electrode
32: active material layer

## Claims

1. An aluminum plate having a plurality of through holes that penetrates the aluminum plate in a thickness direction,
wherein an average opening diameter of the plurality of through holes is 0.1 µm or more and 100 µm or less,
an average opening ratio of the plurality of through holes is 2% or more and 40% or less,
among the plurality of through holes, a percentage of through holes having an opening diameter of 5 µm or less is 40% or less,
among the plurality of through holes, a percentage of through holes having an opening diameter of 40 µm or more is 40% or less, and
among the plurality of through holes, a percentage of through holes in which a ratio S₁/S₀ of an area S₁ of the through holes to an area S₀ of a circle having a long axis of the through hole as a diameter is 0.1 or more and 1 or less is 50% or more.

2. The aluminum plate according to claim 1,
wherein, among the plurality of through holes, the percentage of the through holes in which the ratio S₁/S₀ of the area St of the through holes to the area S₀ of the circle having the long axis of the through hole as the diameter is 0.1 or more and 1 or less is 70% or more.

3. The aluminum plate according to claim 1 or 2,
wherein, among the plurality of through holes, the percentage of the through holes having an opening diameter of 5 µm or less is 30% or less.

4. The aluminum plate according to any one of claims 1 to 3,
wherein, among the plurality of through holes, the percentage of through holes having an opening diameter of 40 µm or more is 30% or less.

5. The aluminum plate according to any one of claims 1 to 4,
wherein the average opening diameter of the plurality of through holes is 0.1 µm or more and 50 µm or less.

6. The aluminum plate according to any one of claims 1 to 5,
wherein, among the plurality of through holes, a percentage of through holes having an opening diameter of 30 µm or more is 30% or less.

7. The aluminum plate according to any one of claims 1 to 6,
wherein a thickness is 5 to 1,000 µm.

8. The aluminum plate according to any one of claims 1 to 7,
wherein the average opening ratio of the plurality of through holes is 30% or less.

9. The aluminum plate according to any one of claims 1 to 8,
wherein a maximum value of an inter-hole distance between adjacent through holes is 300 µm or less.

10. A method for manufacturing an aluminum plate having a plurality of through holes in a thickness direction, comprising:
a coating-forming step of forming a coating including an aluminum hydroxide or an aluminum oxide as a main component on a surface of an aluminum substrate;
a through hole-forming step of forming through holes by carrying out an electrolytic dissolution treatment after the coating-forming step; and
a coating-removing step of removing the coating after the through hole-forming step,
wherein the coating-forming step is a step of forming the coating by carrying out an electrochemical treatment using an acid, a current density in the electrochemical treatment is 3 A/dm² to 60 A/dm², and a thickness of the coating being formed is 0.05 µm or more and 100 µm or less.

11. The method for manufacturing an aluminum plate according to claim 10,
wherein the coating is a coating including an aluminum hydroxide as a main component.

12. The method for manufacturing an aluminum plate according to claim 10 or 11,
wherein, in the coating-forming step, the coating is formed by carrying out the electrochemical treatment using nitric acid, hydrochloric acid, sulfuric acid, phosphoric acid, oxalic acid, or a mixed acid of two or more thereof.
